**Europäisches Patentamt**

**European Patent Office**

**Office européen des brevets**

(19)

(11) Numéro de publication : **0 130 936 B1**

(12)

# FASCICULE DE BREVET EUROPÉEN

(45) Date de publication du fascicule du brevet :
27.07.88

(51) Int. Cl.⁴ : **B 27 C 9/04**

(21) Numéro de dépôt : **84810207.5**

(22) Date de dépôt : **02.05.84**

(54) **Machine universelle pour le bricolage.**

(30) Priorité : 06.05.83 CH 2474/83

(43) Date de publication de la demande :
09.01.85 Bulletin 85/02

(45) Mention de la délivrance du brevet :
27.07.88 Bulletin 88/30

(84) Etats contractants désignés :
**AT BE DE FR GB IT NL SE**

(56) Documents cités :
**DE-C- 814 661**
**FR-A- 879 940**
**GB-A- 2 082 713**
**US-A- 2 784 752**
**US-A- 2 923 330**
**US-A- 3 299 918**
**US-A- 3 387 638**
**US-A- 3 484 917**

(73) Titulaire : **MEFINA S.A.**
**5a Boulevard de Pérolles**
**CH-1700 Fribourg (CH)**

(72) Inventeur : **Fresard, Marcel**
**Chemin de la Caroline 22**
**CH-1213 Petit-Lancy (Genève) (CH)**
Inventeur : **Plomb, Francis**
**Avenue du Lignon 64**
**CH-1219 Le Lignon (Genève) (CH)**
Inventeur : **Court, Pierre**
**rue de Vélodrome 10**
**CH-1205 Genève (CH)**

(74) Mandataire : **Ardin, Pierre**
**PIERRE ARDIN & CIE 22, rue du Mont-Blanc**
**CH-1201 Genève (CH)**

## Description

L'invention a pour objet une machine-outil à multiples fonctions pour travailler des matériaux tels que bois, métal et matière plastique, destinée plus particulièrement aux bricoleurs et maquettistes et occupant un espace réduit.

On connaît déjà des machines de ce genre, comprenant une scie circulaire, entraînée par un moteur électrique, monté dans le socle d'une table inclinable et réglable en hauteur. Il est possible de substituer à la lame de scie circulaire un accessoire pour mouluer, mortaiser, percer, rainer, polir, poncer, dégauchir ou raboter. On connaît également des perceuses électriques, montées sur des supports et capables d'entraîner en rotation des toupies, fraises, ponceuses et autres accessoires.

Par exemple, le brevet US-2 784 752 décrit une machine à multiples fonctions comprenant un bâti de tour auquel est fixé un montant d'appui d'une colonne verticale supportant un bras supérieur qui peut être enlevé et à une extrémité duquel est montée une perceuse électrique, un dispositif de guidage d'une scie circulaire étant soudé à l'autre extrémité, ce bras s'étendant de part et d'autre de la colonne verticale, un moteur électrique étant fixé au bâti de tour et destiné à entraîner la perceuse électrique et un second organe de rotation monté dans le montant et disposé perpendiculairement à la perceuse.

La machine selon l'invention, qui permet de regrouper un plus grand nombre d'opérations dans un espace réduit et qui comprend un bras supérieur dans lequel est monté un premier organe rotatif, un montant, un bâti inférieur un second organe rotatif et un moteur électrique destiné à entraîner les organes en rotation, est caractérisée en ce que le bras supérieur, le montant et le bâti inférieur forment un ensemble rigide, le bras supérieur étant fixe par rapport au bâti inférieur et le recouvrant de façon espacée, le premier organe rotatif ayant une extrémité faisant face au bâti inférieur, ce dernier portant le second organe rotatif dont une extrémité fait face au bras supérieur, l'axe de rotation de ce second organe (16) étant sensiblement parallèle à l'axe du premier organe rotatif, le moteur étant disposé dans le montant et mis en circuit par un inverseur.

Le dessin annexé représente schématiquement et à titre d'exemple une forme d'exécution de la machine selon l'invention.

La figure 1 en est une vue d'ensemble en perspective.

La figure 2 représente la face interne d'une paroi appliquée contre le bâti inférieur et le montant de la machine, représentée à la figure 1.

La figure 3 est une vue d'ensemble en coupe longitudinale de la machine, représentée à la figure 1.

La figure 4 est une vue partielle à plus grande échelle et partiellement en coupe du bras supérieur de la machine, représentée à la figure 3.

La figure 5 est une vue partielle en coupe transversale de la figure 4.

La figure 6 est une vue partielle en coupe horizontale avec arrachement du bâti inférieur de la figure 3 à plus grande échelle.

La figure 7 est une vue en coupe transversale du bâti inférieur, montrant l'entraînement d'une scie sauteuse.

La figure 8 est une autre vue en coupe transversale du bâti inférieur montrant l'entraînement d'une scie à découper.

La figure 9 représente l'organe d'appui et de rappel de la scie à découper.

La figure 10 est une vue de dessus du plateau.

La figure 11 représente un élément du guidage et de protection lors du fraisage ou du chantournage.

La figure 12 est une vue partielle en élévation du bâti inférieur de la machine, représentée à la figure 1.

La figure 13 représente un détail en coupe partielle des organes de réglage des positions du plateau.

La figure 14 est une vue partielle de dessus du plateau montrant un guide fixé à des barres de guidage du plateau.

La figure 15 en est une vue en coupe longitudinale montrant la fixation du guide aux barres de guidage.

La figure 16 est une vue en coupe longitudinale du plateau montrant la fixation des barres de guidage.

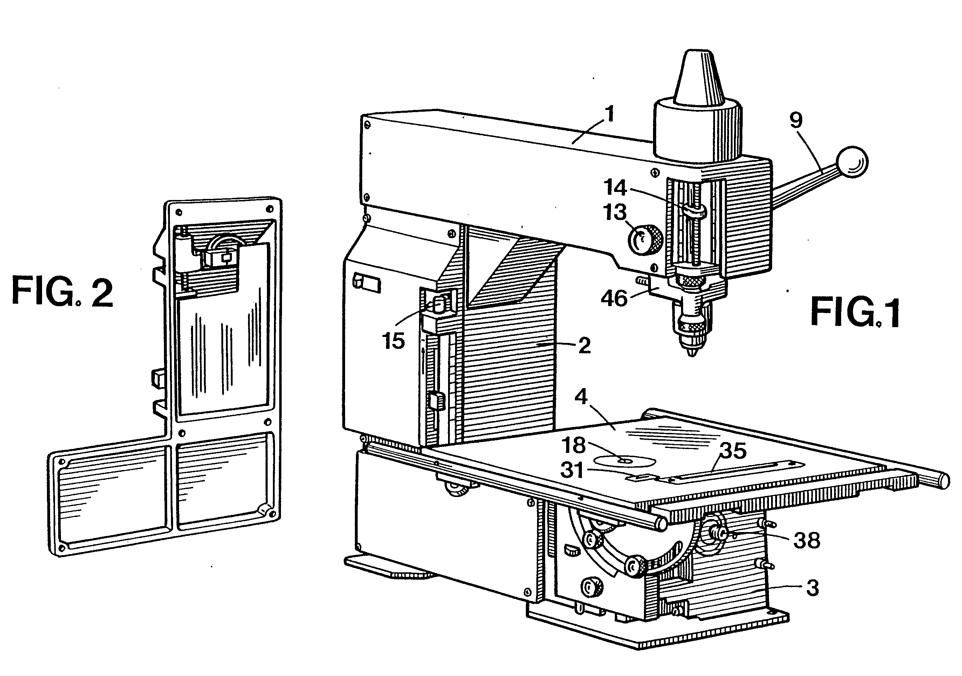

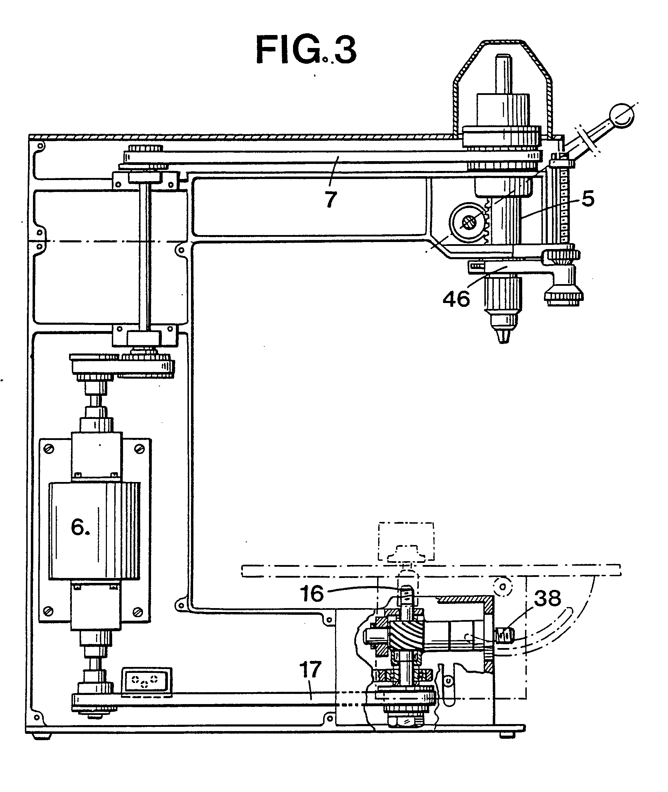

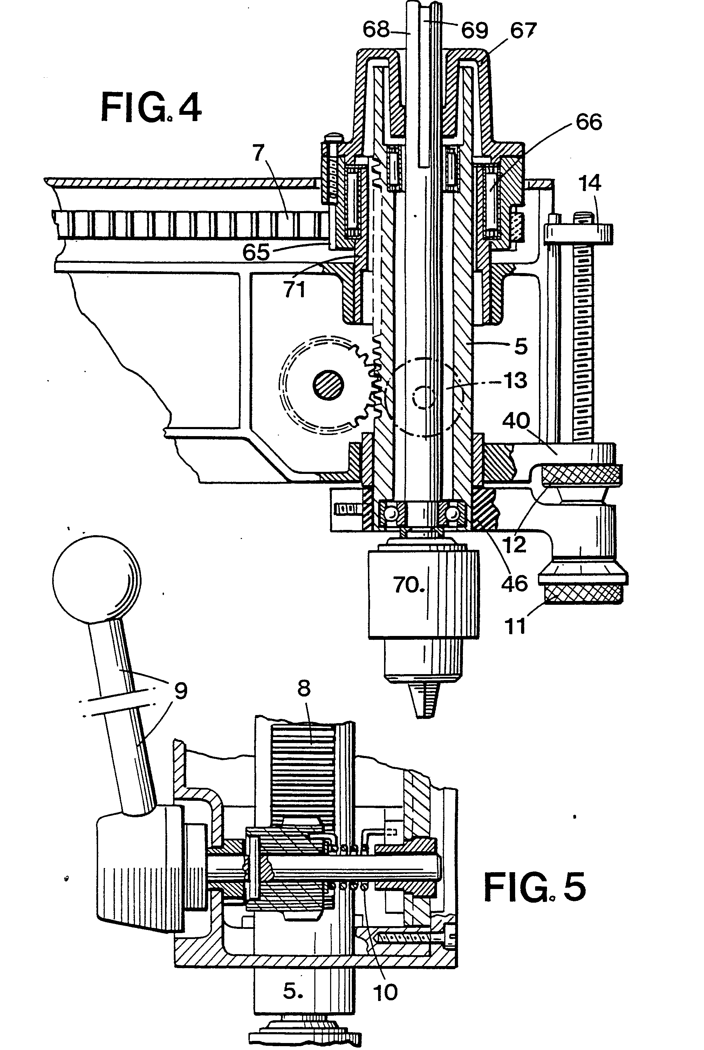

La machine représentée à la figure 1 comprend un bras supérieur 1, un montant 2 et un bâti inférieur 3 sur lequel est monté un plateau 4. Comme représenté en coupe longitudinale aux figures 3 et 4, une poupée porte-broche est montée verticalement dans le bras supérieur. Une broche 68 est entraînée en rotation dans le sens des aiguilles d'une montre à partir d'un moteur électrique 6 par une courroie d'entraînement 7. Un dispositif de commande à crémaillère 8 des mouvements ascendant et descendant du porte-broche 5 est actionné par un levier de commande 9 contre l'action d'un ressort de rappel 10, comme représenté à la figure 5. Ce dispositif comprend encore une mollette 11 limitant la course descendante du porte-broche 5 par une butée mobile 14 et une mollette 12 limitant sa course ascendante par une butée 40 solidaire du bras supérieur 1.

L'entraînement de la broche 68 d'un porte-outil 70 se fait par l'intermédiaire d'un premier manchon 67 formant pignon de courroie 65 monté sur un roulement à aiguilles 66 solidaire d'un second manchon 71 faisant partie du bras supérieur 1. Le premier manchon 67 présente au moins une clavette engagée dans une rainure 69 de la broche 68.

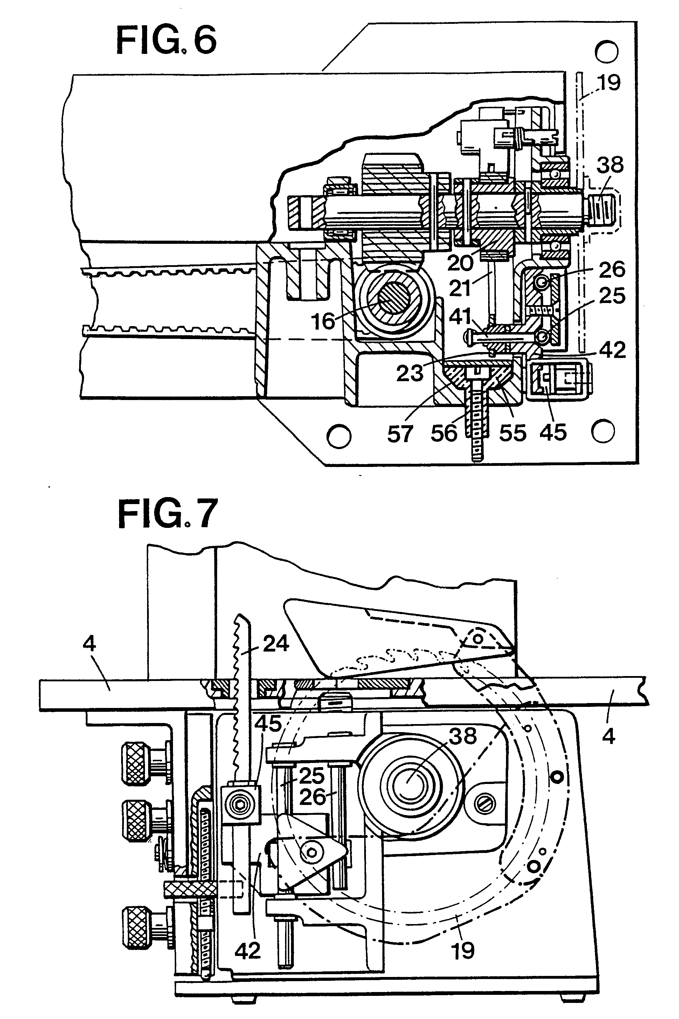

Un inverseur de courant 15 permet d'entraîner en rotation dans le sens contraire des aiguilles d'une montre une première prise de force 16, montée verticalement dans le bâti inférieur à partir du moteur électrique 6 par une courroie d'entraînement 17. Cette prise de force 16 qui se trouve sous un orifice circulaire 18 du plateau 4, lorsque ce dernier est en position horizontale, est destinée à recevoir et à entraîner en rotation des outils tels que fraise, toupie, ponceuse, meule, etc. Elle engrène par ailleurs une seconde prise de force 38, orientée à angle droit et faisant saillie en bout du bâti inférieur 3. Cette prise de force 38 sert soit à l'entraînement d'une scie circulaire 19, représentée en traits mixtes aux figures 6 et 7 ou tout autre outil tel que disque de ponçage, meule etc., ou d'autres appareils accessoires, tels qu'un câble souple par exemple.

Sur l'arbre de la prise de force 38 tel que représenté aux figures 6, 7 et 8 un excentrique 20 est relié à un levier 21 par une bielle 43. Le levier 21 est muni à l'une de ses extrémités d'un pivot 22 qui, lorsqu'il est engagé dans la partie horizontale d'une fente 44 en L d'une bascule 28, assure un déplacement angulaire de va-et-vient de son autre extrémité munie d'un pivot 23. Ce pivot 23 est articulé sur un axe 41 solidaire d'un support mobile 42 auquel peut être fixée une lame de scie sauteuse 24. Le support 42 est rendu solidaire de barres parallèles 25, 26 montées coulissantes verticalement en bout du bâti inférieur 3 de façon à entraîner la scie sauteuse 24 dans un mouvement de va-et-vient vertical.

Selon une variante, la lame de scie sauteuse 24 peut être pivotée sur le support 42 et soumise à l'action d'un excentrique commandé par la seconde prise de force 38. On confère ainsi un mouvement orbital à la lame de scie 24 lors de son entraînement de va-et-vient par le support 42, de façon à faciliter le dégagement de la lame de scie 24 en fin de coupe.

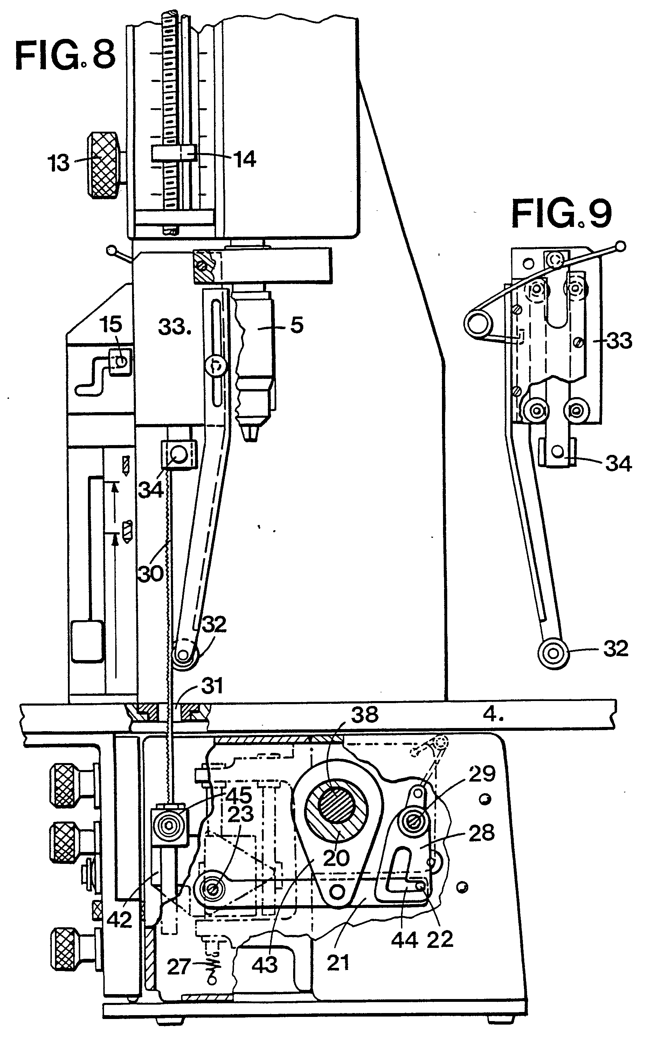

Comme représenté également à la figure 8, on peut substituer à la scie sauteuse 24 une scie à découper 30. Dans les deux cas, la scie traverse une fente 31 du plateau 4. La scie à découper 30 prend appui contre une roulette 32 faisant partie d'un dispositif de guidage 33, fixé au porte-broche 5. Lorsqu'on monte une lame de scie à découper 30 sur la machine, elle est fixée par une bride de fixation 45 au support 42 d'une part et d'autre part à un organe de rappel élastique 34 monté dans le dispositif de guidage 33 rendu solidaire du support 46 des mollettes 11, 12, du porte-broche 5. Le dispositif de guidage 33 peut également être utile au maintien de la scie sauteuse 24 dans sa position de travail. Dans les deux cas, ce dispositif de guidage peut encore servir d'appui au matériau à découper.

Selon une variante, l'organe de rappel élastique 34 est engagé dans le montant 2 du bras supérieur 1 de la machine et relié à l'extrémité d'un premier bras de levier articulé dans le bras supérieur 1 de la machine et relié par l'extrémité d'un second bras de ce levier à l'extrémité de la lame de scie opposée à celle qui est reliée au support 42.

Comme représenté au dessin, un dispositif de réglage en hauteur de la roulette 32 permet de plaquer le matériau sur le plateau 4.

Lorsqu'on fait tourner la bascule 28 sur son pivot 29 dans le sens contraire des aiguilles d'une montre, par exemple au moyen d'un tournevis dont la lame est introduite dans une rainure que présente le pivot 29, on engage le pivot 22 du bras 21 dans la partie verticale de la fente en L 44. On interrompt ainsi le mouvement de va-et-vient vertical de la scie 24 ou 30, le pivot 23 étant retenu en position basse par un ressort 27 et le pivot 22 se déplaçant de bas en haut et vice versa dans la partie verticale de la fente en L 44 lorsque le bras 21 est actionné par l'excentrique 20.

Comme représenté aux figures 1, 10 et 12, le plateau 4 est monté pivotant autour d'un axe virtuel 52 correspondant sensiblement à l'arête gauche de l'entaille 35 livrant passage à la scie circulaire 19 de façon à permettre de scier en position inclinée du plateau 4.

Pour ce faire la face inférieure du plateau 4 est rendue solidaire d'une équerre 47 dont la partie à angle droit par rapport au plateau 4 est appliquée contre un support vertical 48. Une entaille incurvée 49 pratiquée dans la paroi du support vertical 48 dans laquelle est engagé un coulisseau 50 assure le guidage de l'équerre 47 sur une coulisse incurvée 51 du support vertical 48. L'incurvation de l'entaille 49 et de la coulisse incurvée 51 du support vertical 48 ont comme centre commun l'axe virtuel 52. La position angulaire choisie pour le plateau 4 est assurée d'une part par blocage du coulisseau 50 dans l'entaille 49 au moyen d'un écrou 53 et d'autre part par blocage de l'équerre 47 contre le support 48 à l'aide de l'écrou 54.

D'autre part, comme représenté aux figures 6, 12 et 13, un coulisseau 55 muni d'une paire de tétons de guidage 56 est engagé dans une coulisse 57 du bâti inférieur 3. Le support vertical 48 présente deux alésages engagés sur la paire de tétons 56. Il est ainsi possible de déplacer le plateau 4 en hauteur et de le fixer à la hauteur choisie au moyen d'écrous 58, 59, vissés sur l'extrémité filetée des tétons 56. Une butée de réglage 60 de la hauteur du plateau 4 commandée par une molette 61 permet d'ajuster le niveau du plateau 4. Afin de munir les organes d'entraînement 16 ou 38 du bâti inférieur 3 d'accessoires divers, il peut être nécessaire de séparer au préalable le plateau 4 et son support vertical 48 du bâti inférieur 3. Lors de la remise en place du plateau 4, la butée 60 permet de le redisposer dans sa position antérieure.

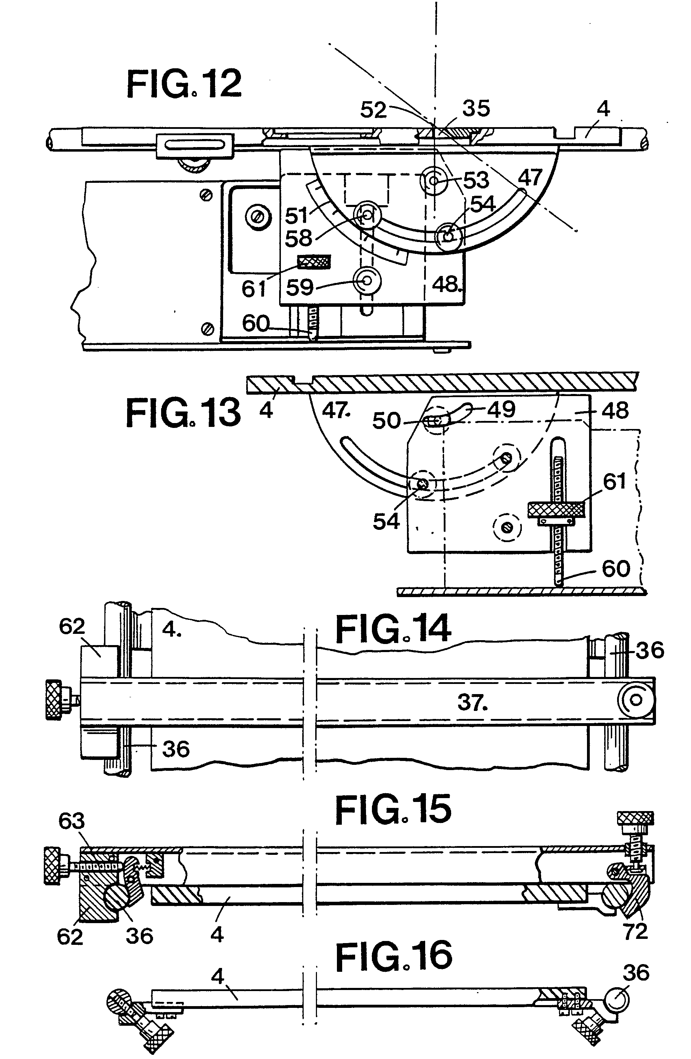

Comme représenté aux figures 14 à 16, un guide 37 présente à une de ses extrémités un dispositif d'orientation et de positionnement simultané, strictement à angle droit par rapport à une barre de guidage 36 solidaire d'un bord du plateau 4. Il consiste à plaquer contre la barre de guidage 36 une plaque d'appui 62 lors du serrage d'une vis 63 actionnant une bascule de serrage 64. La position définitive du guide 37 est ainsi assurée par simple verrouillage d'un autre organe de fixation 72 à la barre 36 solidaire du bord opposé du plateau 4. Les barres de guidage 36 sont fixées de façon démontable le long des bords du plateau 4.

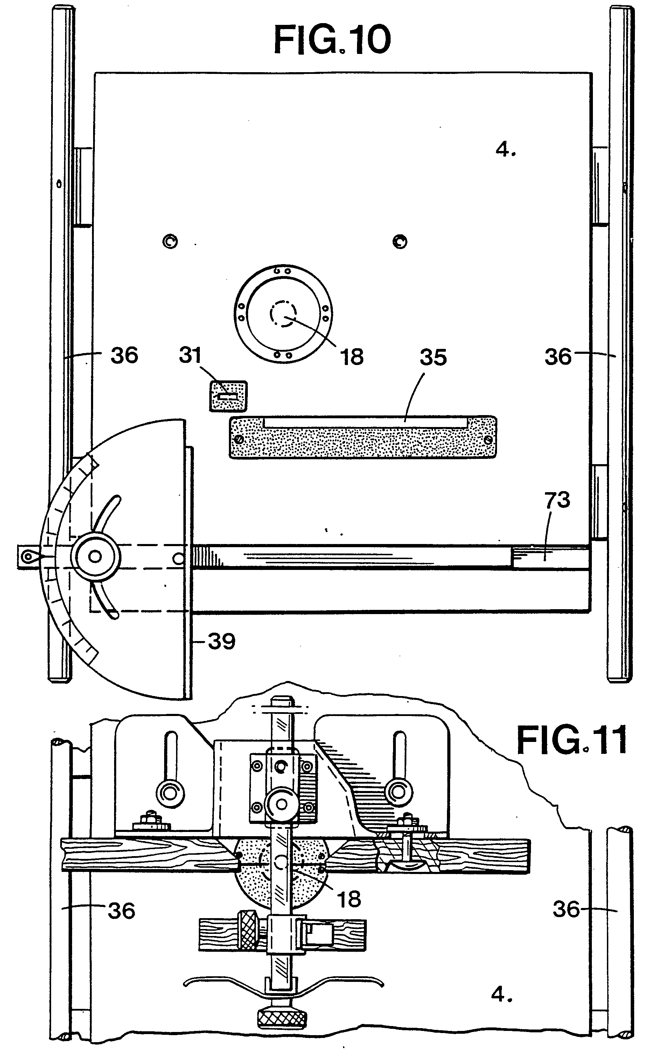

Comme représenté à la figure 10, une rainure 73 a été prévue dans le plateau 4 pour permettre l'utilisation d'un guide onglets 39.

Comme représenté à la figure 11, on a également prévu un dispositif de guidage et de protection réglable destiné à être fixé au plateau 4 pour des opérations telles que fraisage, chantournage etc. actionnées par la prise de force 16.

## Revendications

1. Machine-outil à fonctions multiples ayant un bâti en forme de C dont le bras supérieur horizontal (1) comporte une première broche porte-outil rotative (68) à axe vertical dont l'extrémité recevant les outils fait face à la partie inférieure (3) de ce bâti, le bâti comportant aussi un montant vertical (2) reliant le bras supérieur (1) avec la partie inférieure (3) du bâti, le bâti comportant aussi une deuxième broche porte-outil (16) et un seul moteur entraînant ces deux broches (68, 16) en rotation, caractérisée en ce que le bâti constitue un ensemble rigide, le moteur est disposé dans le montant (2) et mis en circuit par un inverseur (15), la deuxième broche (16) est montée dans la partie inférieure (3) du bâti, son axe étant sensiblement parallèle à l'axe de la première broche (68) et son extrémité porte-outil faisant face au bras supérieur (1).

2. Machine selon la revendication 1, caractérisée en ce que les premier et second organes rotatifs (68, 16) sont orientés en sens contraire, le second organe rotatif (16) entraînant à son tour un troisième organe rotatif (38) orienté angulairement par rapport au second.

3. Machine selon les revendications 1 et 2, caractérisée en ce que le troisième organe rotatif (38) commande un support mobile (42) par l'intermédiaire d'un excentrique (20) l'animant d'un mouvement de va-et-vient.

4. Machine selon les revendications 1 à 3, caractérisée en ce que le support mobile (42) est relié à l'une des extrémités (23) d'un levier (21) articulé à une bielle (43) pivotée sur un excentrique (20) et muni à son autre extrémité d'un pivot (22) engagé dans une fente (44) en L d'une bascule (28), le tout de façon que dans une première position de la bascule (28) dans laquelle le pivot (22) se trouve à l'extrémité droite de la base du L l'excentrique (20) entraîne le support mobile (42) dans un mouvement de va-et-vient et que dans une seconde position de la bascule (28), l'excentrique (20) entraîne le pivot (22) dans un mouvement de va-et-vient dans le bras du L, l'extrémité (23) du levier (21) étant alors immobilisée.

5. Machine selon les revendications 1 et 2, caractérisée en ce que le premier organe rotatif (68) est une broche réglable en hauteur.

6. Machine selon les revendications 1, 2 et 5, caractérisée en ce que le réglage en hauteur de la broche (68) est assuré par un levier (9) de commande à crémaillère.

7. Machine selon les revendications 1 et 2, caractérisée en ce que le second organe rotatif (16) est une première prise de force destinée à entraîner en rotation des outils, tels que fraise, toupie, meule ou ponceuse, accouplés à cette prise de force à travers un orifice (18), pratiqué dans un plateau (4), superposé au bâti inférieur 3.

8. Machine selon les revendications 1 à 3, caractérisée en ce que le troisième organe rotatif est une seconde prise de force (38) engrenée à angle droit avec la première prise de force (16) pour entraîner en rotation, en bout du bâti inférieur 3, des outils tels qu'une scie circulaire ou un disque de ponçage.

9. Machine selon les revendications 1 à 3 et 8, caractérisée en ce qu'un excentrique (20) monté sur la seconde prise de force (38) provoque un déplacement angulaire d'un levier (21) pivoté à l'une de ses extrémités (22) et dont l'autre extrémité (23) transmet un mouvement de va-et-vient à une scie sauteuse (24).

10. Machine selon les revendications 1 à 3, 8 et 9, caractérisée en ce qu'elle comprend une lame de scie à découper (30), reliée d'une part à l'extrémité (23) du levier (21), soumis à un déplacement angulaire par l'excentrique (20) monté sur la seconde prise de force (38) et d'autre part à un organe de rappel élastique (34), monté dans un dispositif de guidage (33) fixé au porte-broche 5.

11. Machine selon les revendications 1, 2 et 7, caractérisée en ce que le plateau (4) est monté au-dessus du bâti inférieur (3) de façon pivotante autour d'un axe virtuel (52) situé à la face supérieure du plateau (4) entre les bords supérieurs des parois d'une entaille (35) découpée dans le plateau (4) pour livrer passage à un outil.

12. Machine selon les revendications 1, 2, 7 et 11, caractérisée en ce que la face inférieure du plateau (4) est rendue solidaire d'au moins une équerre (47) dont la partie à angle droit par rapport au plateau (4) est incurvée à sa base et montée de façon coulissante sur une coulisse incurvée (51) d'un support vertical (48).

13. Machine selon les revendications 1, 2, 11 et 12, caractérisée en ce qu'un coulisseau (50) solidaire de l'équerre (47) est engagé dans une entaille incurvée (49) pratiquée dans la paroi du support vertical (48), la coulisse incurvée (51) et l'entaille incurvée (49) pratiquées dans le support vertical (48) ayant l'axe virtuel (52) pour centre commun.

## Claims

1. Multiple function machine tool, comprising a C-shaped frame, the horizontal upper arm (1) of said frame carrying a first rotating tool holder spindle (68) of vertical axis, the end of said spindle which holds the tools facing the lower part (3) of said frame, the frame comprising also a vertical upright (2) linking the upper arm (1) to the lower part (3) of the frame, said frame further comprising a second tool holder spindle (16) and a single motor to rotate the two spindles (68, 16), characterized in that the frame forms a rigid assembly, the motor is placed within the upright (2) and turned on by a current reverser (15), the second spindle (16) is mounted on the lower part (3) of the frame, the axis of said second spindle being substantially parallel to the axis of the first spindle (68) and its tool holder end facing the upper arm (1).

2. Machine according to claim 1, characterized in that the first and second rotating elements (68, 16) are oriented in opposite directions, the second rotating element (16) in turn driving a third rotating element (38) oriented angularly in relation to the second.

3. Machine according to claims 1 and 2, characterized in that the third rotating element (38) controls a mobile support (42) by an eccentric (20) driving it in a reciprocating movement.

4. Machine according to claims 1 to 3, characterized in that the mobile support (42) is connected to one of the ends (23) of a lever (21) hinged to a connecting rod (43) pivoting on an eccentric (20) and provided at its other end with a pivot (22) engaged in an L-shaped slot (44) of a rocker (28), all in such a way that in a first position of the rocker (28) in which the pivot (22) is at the right end of the base of the L, the eccentric (20) drives the mobile support (42) in a reciprocating movement, and in a second position of the rocker (28), the eccentric (20) drives the pivot (22) in a reciprocating movement in the arm of the L, the end (23) of the lever (21) then being immobilized.

5. Machine according to claims 1 and 2, characterized in that the first rotating element (68) is a spindle that is adjustable in height.

6. Machine according to claims 1 and 2, characterized in that adjustment of the height of the spindle (68) is assured by a rack control lever (9).

7. Machine according to claims 1 and 2, characterized in that the second rotating element (16) is a first power takeoff intended to drive tools in rotation such as milling cutters, shapers, grinding wheels or sanders connected to this power takeoff through an orifice (18) made in a plate (4) superposed on lower frame 3.

8. Machine according to one of claims 1 to 3, characterized in that the third rotating element is a second power takeoff (38) meshing at right angles with a first power takeoff (16) to drive in rotation, at the end of the lower frame 3, tools such as a circular saw or a sanding disk.

9. Machine according to claims 1 to 3 and 8, characterized in that an eccentric (20) mounted on the second power takeoff (38) causes an angular movement of a lever (21) hinged at one of its ends (22) and whose other end (23) transmits a reciprocating movement to a saber saw (24).

10. Machine according to claims 1 to 3, 8 and 9, characterized in that it comprises the blade of a scroll saw (30) connected, on the one hand, to the end (23) of the lever (21), subjected to an angular movement by eccentric (20) mounted on the second power takeoff (38) and, on the other hand, to an elastic return element (34), mounted in a guide device (33) fastened to the spindleholder (5).

11. Machine according to claims 1, 2 and 7, characterized in that the plate (4) is mounted above the lower frame (3) to pivot around a virtual axis (52) located at the upper face of the plate (4) between the upper edges of the walls of a notch (35) cut into the plate (4) to provide passage for a tool.

12. Machine according to claims 1, 2, 7 and 11, characterized in that the lower face of plate (4) is made solid with at least a bracket (47) whose part at right angles with plate (4) is curved at its base and mounted to slide on a curved slide (51) of a vertical support (48).

13. Machine according to claims 1, 2, 11 and 12, characterized in that a sliding block (50) solid with the bracket (47) is engaged in a curved notch (49) made in the wall of the vertical support (48), the curved slide (51) and curved notch (49) made in the vertical support (48) having a virtual axis (52) as a common center.

**Patentansprüche**

1. Werkzeugmaschine mit Mehrfachfunktionen, umfassend ein c-förmiges Gehäuse, dessen oberer horizontaler Arm (1) eine erste rotierende Werkzeughaltespindel (68) mit vertikaler Achse umfaßt, deren die Werkzeuge aufnehmendes Ende gegenüber dem unteren Teil (3) dieses Gehäuses liegt, wobei das Gehäuse weiters einen vertikalen Ständer (2) umfaßt, welcher den oberen Arm (1) mit dem unteren Teil (3) des Gehäuses verbindet, wobei das Gehäuse außerdem eine zweite Werkzeughaltespindel (16) und einen einzigen Motor umfaßt, der die beiden Spindeln (68, 16) in Drehung versetzt, dadurch gekennzeichnet, daß das Gehäuse eine starre Einheit bildet und daß der Motor in dem Ständer (2) angeordnet ist und durch einen Umschalter (15 ) geschaltet wird, wobei die zweite Spindel (16) auf dem unteren Teil (3) des Gehäuses vorgesehen ist und ihre Achse im wesentlichen parallel zu der Achse der ersten Spindel (68) ist und ihr die Werkzeuge aufnehmendes Ende gegenüber dem oberen Arm (1) liegt.

2. Maschine nach Anspruch 1, dadurch gekennzeichnet, daß das erste und das zweite Drehorgan (68, 16) entgegengesetzt ausgerichtet sind, wobei das zweite Drehorgan (16) seinerseits ein drittes Drehorgan (38) antreibt, das winkelig zu dem zweiten ausgerichtet ist.

3. Maschine nach den Ansprüchen 1 und 2, dadurch gekennzeichnet, daß das dritte Drehorgan (38) einen beweglichen Träger (42) über einen Exzenter (20) steuert, der ihn in eine Hin- und Herbewegung versetzt.

4. Maschine nach den Ansprüchen 1 bis 3, dadurch gekennzeichnet, daß der bewegliche Träger (42) an einem seiner Enden (23) mit einem Hebel (21) verbunden ist, der an einem Pleuel (43) angelenkt ist, welches auf einem Exzenter (20) schwenkbar gelagert ist und daß der Hebel (21) an seinem anderen Ende mit einem Zapfen (22) verbunden ist, der in einen L-förmigen Schlitz (44) einer Wippe (28) eingreift, so daß in einer ersten Stellung der Wippe (28), in der sich der Zapfen (22) am rechten Ende der Basis des L befindet, der Exzenter (20) den beweglichen Träger (42) in eine Hin- und Herbewegung versetzt und daß in einer zweiten Stellung der Wippe (28) der Exzenter (20) den Zapfen (22) in eine Hin- und Herbewegung im Arm des L versetzt, wodurch das Ende (23) des Hebels (21) festgesetzt wird.

5. Maschine nach den Ansprüchen 1 und 2, dadurch gekennzeichnet, daß das erste Drehorgan (68) eine höhenverstellbare Spindel ist.

6. Maschine nach den Ansprüchen 1, 2 und 5, dadurch gekennzeichnet, daß die Höhenverstellung der Spindel (68) durch einen Steuerhebel (9) für eine Zahnstange gewährleistet wird.

7. Maschine nach den Ansprüchen 1 und 2, dadurch gekennzeichnet, daß das zweite Drehorgan (16) eine erste Zapfwelle ist, die dazu vorgesehen ist, Werkzeuge, wie beispielsweise eine Fräse, eine Fräse für Holzbearbeitung, eine Schleifscheibe oder einen Bandschleifer anzutreiben, welche über eine Öffnung (18), die in einer über dem unteren Gehäuse (3) angeordneten Platte (4) vorgesehen ist, mit dieser Zapfwelle verbunden sind.

8. Maschine nach den Ansprüchen 1 bis 3, dadurch gekennzeichnet, daß das dritte Drehorgan eine zweite Zapfwelle (38) ist, welche im rechten Winkel in die erste Zapfwelle (16) eingreift, um am Ende des unteren Gehäuses (3) Werkzeuge, wie beispielsweise eine Kreissäge oder eine Schleifpapierscheibe in Drehung zu versetzen.

9. Maschine nach den Ansprüchen 1 bis 3 und 8, dadurch gekennzeichnet, daß ein auf der zweiten Zapfwelle (38) angeordneter Exzenter (20) eine winkelmäßige Verstellung eines an einem seiner Enden (22) drehbar gelagerten Hebels (21) bewirkt, dessen anderes Ende (23) auf eine Stichsäge (24) eine Hin- und Herbewegung überträgt.

10. Maschine nach den Ansprüchen 1 bis 3, 8 und 9, dadurch gekennzeichnet, daß sie ein Blatt einer Dekupiersäge (30) umfaßt, das einerseits mit dem Ende (23) des Hebels (21) verbunden ist, welcher durch den Exzenter (20), der auf der zweiten Zapfwelle (38) angeordnet ist, winkelmäßig verstellt wird, und das anderseits mit einem elastischen Federorgan (34) verbunden ist, das in einer Führungsvorrichtung (33) angeordnet ist, welche auf dem Spindelträger (5) befestigt ist.

11. Maschine nach den Ansprüchen 1, 2 und 7, dadurch gekennzeichnet, daß die Platte (4) oberhalb des unteren Gehäuses (3) um eine gedachte Achse (52) schwenkbar angeordnet ist, welche auf der oberen Fläche der Platte (4) zwischen den oberen Rändern der Seitenwände eines Schlitzes (35) vorgesehen ist, der in die Platte (4) eingeschnitten ist, um einen Durchgang für ein Werkzeug zu schaffen.

12. Maschine nach den Ansprüchen 1, 2, 7 und 11, dadurch gekennzeichnet, daß die untere Fläche der Platte (4) mit mindestens einem Winkelmesser (47) fest verbunden ist, dessen zur Platte (4) rechtwinkelig angeordneter Teil an seiner Basis gewölbt ist und gleitend auf einer gewölbten Führung (61) eines vertikalen Trägers (48) montiert ist.

13. Maschine nach den Ansprüchen 1, 2, 11 und 12, dadurch gekennzeichnet, daß eine mit dem Winkelmesser (47) fest verbundene Führung (50) in einen gebogenen Einschnitt (49) eingreift, der in der Seitenwand des vertikalen Trägers (48) vorgesehen ist, wobei die gewölbte Führung (51) und der gewölbte Einschnitt (49), welcher in dem vertikalen Träger (48) vorgesehen ist, die gedachte Achse (52) als gemeinsames Zentrum haben.

FIG.1

FIG. 2

# FIG.3

**0 130 936**

FIG. 4

FIG. 5

# FIG. 6

# FIG. 7

**FIG. 8**

**FIG. 9**

# FIG.10

4.

36    31    18    35    36

73

39

# FIG.11

36    18    36

4.

**FIG.12**

**FIG.13**

**FIG.14**

**FIG.15**

**FIG.16**